# EUROPEAN PATENT APPLICATION

(11) **EP 2 034 396 A2**
(43) Date of publication of application: **11.03.2009**
(21) Application number: 07025224.2
(22) Date of filing: 28.12.2007
(51) Int. Cl.: G06F 3/048

(54) **Image browsing method and image browsing apparatus thereof**

(30) Priority: 06.09.2007 CN 200710147296
(71) Applicant: HiTi Digital, Inc., Taipei City (TW)
(72) Inventor: Kao, Chih-Hung, Banqiao City Taipei Hsien (TW); Ying, Chen-Yang, Kaohsiung City (TW); Huang, Kuan-Chih, Tan-Sui Town Taipei Hsien (TW)
(74) Representative: Hager, Thomas Johannes

(57) **Abstract**

An image browsing method includes: detecting a movement corresponding to a user input to generate a detecting variation; checking if the detecting variation is greater than a predetermined threshold value; when the detecting variation is greater than the predetermined threshold value, displaying an animation indicative of completely turning a page for showing a target image instead of a current image in order to allow browsing of the target image; and when the detecting variation is not greater than the predetermined threshold value, displaying the current image for browsing of the current image.

## Description

The present invention relates to an image browsing method and image browsing apparatus thereof according to the pre-characterizing clauses of claims 1 and 6.

In recent years, a new electrical product called a "digital album" has been developed by combining an LCD panel and a photo frame, and is intended to replace the traditional photo frame.

Current digital image display apparatus are placed on a table or a wall to allow users to view the digital images. Handheld digital image display apparatus are also available. All of these digital image display apparatus, however, only provide the simple function of viewing a current digital image, but cannot be leafed through as in a traditional album in order to view a plurality of digital images.

This in mind, the present invention aims at providing an image browsing method and image browsing apparatus thereof to allow users to view digital images in the same way as viewing traditional albums.

This is achieved by an image browsing method and image browsing apparatus according to claims 1 and 6. The dependent claims pertain to corresponding further developments and improvements.

As will be seen more clearly from the detailed description following below, the claimed image browsing method includes: detecting a movement corresponding to a user input to generate a detecting variation; checking if the detecting variation is greater than a predetermined threshold value; when the detecting variation is greater than the predetermined threshold value, displaying an animation indicative of completely turning a page for showing a target image instead of a current image in order to allow browsing of the target image; and when the detecting variation is not greater than the predetermined threshold value, displaying the current image for browsing of the current image.

As will be seen more clearly from the detailed description following below, the claimed image browsing apparatus includes a displaying unit, a detecting unit and a controlling unit. The detecting unit is utilized for detecting a movement corresponding to a user input to generate a detecting variation. The controlling unit is utilized for checking if the detecting variation is greater than a predetermined threshold value. When the controlling unit determines the detecting variation is greater than the predetermined threshold value, the controlling unit controls the displaying unit to display an animation indicative of completely turning a page for showing a target image instead of a current image in order to allow browsing of the target image. When the controlling unit determines the detecting variation is not greater than the predetermined threshold value, the controlling unit controls the displaying unit to display the current image for browsing of the current image.

In the following, the invention is further illustrated by way of example, taking reference to the accompanying drawings. Thereof
Fig. 1 is a diagram illustrating an image browsing apparatus according to an embodiment of the present invention;
Fig. 2 is a flowchart illustrating an image browsing method according to an embodiment of the present invention;
Fig. 3 is a diagram illustrating an animation indicative of completely turning a page from right to left;
Fig. 4 is a diagram illustrating an animation indicative of completely turning a page from left to right;
Fig. 5 is a diagram illustrating an animation indicative of incompletely turning a page from right to left; and
Fig. 6 is a diagram illustrating an animation indicative of incompletely turning a page from left to right.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...".

Different features of the present invention are detailed as below with reference to the figures, and for convenience of explanation, the same elements in different figures have the same reference numerals.

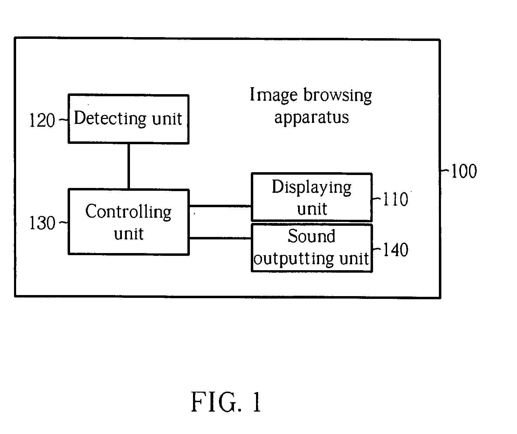

Please refer to Fig. 1. Fig. 1 is a diagram illustrating an image browsing apparatus 100 according to an embodiment of the present invention. As shown in Fig. 1, the image browsing apparatus 100 comprises a displaying unit 110, a detecting unit 120, a controlling unit 130 and a sound outputting unit 140. The detecting unit 120 is utilized for detecting a movement corresponding to a user input to generate a detecting variation Vdet. The controlling unit 130 is utilized for checking if the detecting variation Vdet is greater than a predetermined threshold value Vpre. Please note that the image browsing apparatus 100 is a digital album, the displaying unit 110 is implemented by a liquid crystal displayer (LCD), and the detecting unit 120 is a touch panel in this embodiment; these are for illustrative purposes only, however, and are not meant to be limitations of the present invention. In practice, the displaying unit 110 can be an organic light-emitting diode (OLED) display screen or other kinds of display screens. The detecting unit 120 can be other kinds of touch sensors (e.g. a touch button) or non-touch sensors (e.g. an optical sensor).

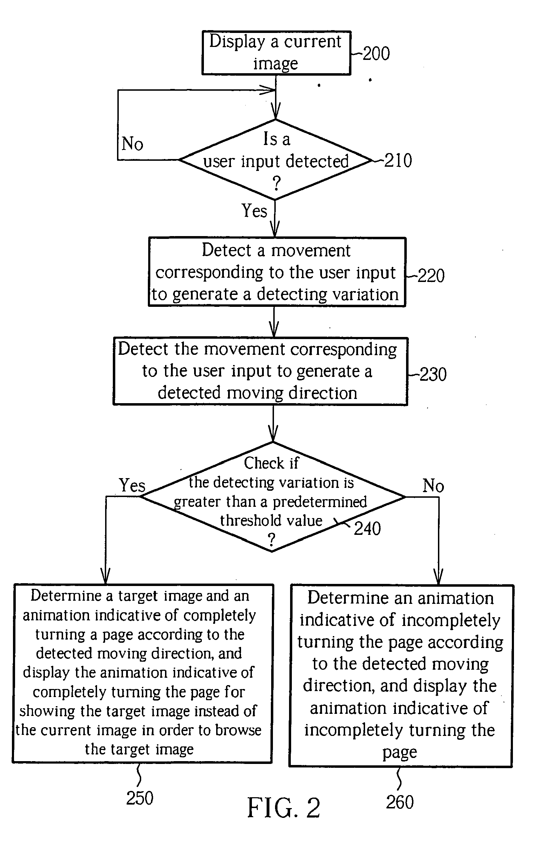

Please refer to Fig. 2. Fig. 2 is a flowchart illustrating an image browsing method according to an embodiment of the present invention. It should be noted that, if the result is substantially the same, the steps in Fig. 2 are not limited to be executed according to the exact order shown in the exemplary flowchart. The steps are as follows:
Step 200: Display a current image for allowing users to browse the current image.
Step 210: Is a user input detected? If yes, go to step 220. If no, go back to step 210 to keep checking if a user input is detected.
Step 220: Detect a movement corresponding to the user input to generate a detecting variation.
Step 230: Detect the movement corresponding to the user input to generate a detected moving direction.
Step 240: Check if the detecting variation is greater than a predetermined threshold value? If yes, go to step 250. If no, go to step 260.
Step 250: Determine a target image and an animation indicative of completely turning a page according to the detected moving direction, and display the animation indicative of completely turning the page for showing the target image instead of the current image in order to browse the target image.
Step 260: Determine an animation indicative of incompletely turning the page according to the detected moving direction, and display the animation indicative of incompletely turning the page.

Further operations of the image browsing apparatus 100 will be explained in the following. It should be noted that the following explanation is for illustrative purposes only and is not a limitation of the present invention. The displaying unit 110 of the image browsing apparatus 100 displays a current image (step 200) and, at the same time, the detecting unit 120 checks if a user input is detected (step 210). When there is no user input detected by the detecting unit 120, the current image is still displayed by the displaying unit 110. This means the user still Wishes to look at the current image. When the detecting unit 120 detects a user input, the detecting unit 120 generates a detecting variation Vdet and a detected moving direction (step 220, 230) according to a movement corresponding to the user input. Next, the controlling unit 230 checks if the detecting variation Vdet is greater than a predetermined threshold value Vpre (step 240). When the controlling unit 130 determines the detecting variation Vdet is greater than the predetermined threshold value Vpre, the controlling unit 130 controls the displaying unit 110 to display an animation indicative of completely turning the page for showing a target image instead of the current image in order to browse the target image. This means the user wants to look at another image (i.e. the target image different from the current image). In this embodiment, the target image the user wants to look at and the animation indicative of completely turning the page for changing to the current image from the target image are both determined according to the detected moving direction by the controlling unit 130 (step 250). On the other hand, when the controlling unit 130 determines the detecting variation Vdet is not greater than the predetermined threshold value Vpre, the controlling unit 130 controls the displaying unit 110 to display an animation indicative of incompletely turning the page. In this case, the current image is still displayed. This means that, although the user wants to change the image, the current page showing the current image fails to change to the next page showing the target image. In this embodiment, the animation indicative of incompletely turning the page is also determined according to the detected moving direction by the controlling unit 130 (step 260).

In this example, it is assumed that the predetermined threshold value Vpre is set to be 0.2cm (the displacement on the detecting unit 120 (touch panel)) and the image browsing apparatus 100 (digital album) is numbered from left to right. These examples are for illustrative purposes only, however, and are not meant as limitations of the present invention. If the displaying unit 110 (LCD) of the image browsing apparatus 100 (digital album) displays a current image on page 9 and the user does not touch the detecting unit 120 (touch panel), no user input will be detected by the detecting unit 120 (touch panel). In this scenario, the current image on page 9 continues to be displayed by the displaying unit 110 (LCD).

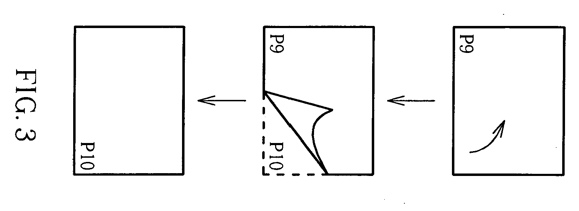

Alternatively, if the displaying unit 110 (LCD) displays a current image on page 9 and one user touches the surface of the detecting unit 120 (touch panel) in a right to left direction moving 0.3 cm, a detecting variation Vdet and a detected moving direction will be detected by the detecting unit 120. The detecting variation Vdet corresponds to 0.3 cm and the detected moving direction corresponds to right-to-left. Since the detecting variation Vdet is greater than the predetermined threshold value Vpre (0.3cm > 0.2cm) and the detected moving direction corresponds to right-to-left, the controlling unit 130 controls the displaying unit 110 (LCD) to display an animation indicative of completely turning the page from right to left for showing a target image on page 10 instead of the current image on page 9, as shown in Fig. 3. Fig. 3 is a diagram illustrating an animation indicative of completely turning the page from right to left.

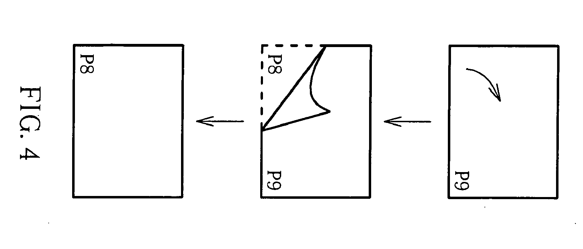

Similarly, if the displaying unit 110 (LCD) displays a current image on page 9 and one user touches the surface of the detecting unit 120 (touch panel) in a left to right direction moving 0.3 cm, a detecting variation Vdet and a detected moving direction will be detected by the detecting unit 120. The detecting variation Vdet corresponds to 0.3 cm and the detected moving direction corresponds to left-to-right. Since the detecting variation Vdet is greater than the predetermined threshold value Vpre (0.3cm > 0.2cm) and the detected moving direction corresponds to left-to-right, the controlling unit 130 controls the displaying unit 110 (LCD) to display an animation indicative of completely turning the page from left to right for showing a target image on page 8 instead of the current image on page 9, as shown in Fig. 4. Fig. 4 is a diagram illustrating an animation indicative of completely turning the page from left to right.

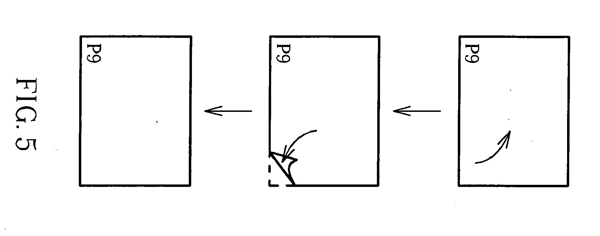

In addition, if the displaying unit 110 (LCD) displays a current image on page 9 and one user touches the surface of the detecting unit 120 (touch panel) in a right to left direction moving 0.1 cm, a detecting variation Vdet and a detected moving direction will be detected by the detecting unit 120. The detecting variation Vdet corresponds to 0.1 cm and the detected moving direction corresponds to right-to-left. Since the detecting variation Vdet is not greater than the predetermined threshold value Vpre (0.1cm < 0.2cm) and the detected moving direction corresponds to right-to-left, the controlling unit 130 controls the displaying unit 110 (LCD) to display an animation indicative of incompletely turning the page from right to left and still displays the current image on page 9, as shown in Fig. 5. Fig. 5 is a diagram illustrating an animation indicative of incompletely turning the page from right to left.

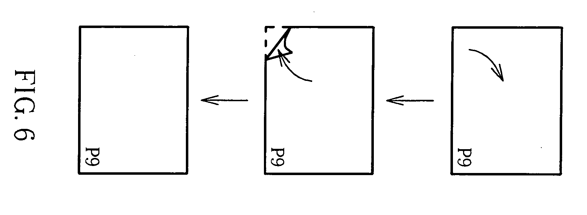

Similarly, if the displaying unit 110 (LCD) displays a current image on page 9 and one user touches the surface of the detecting unit 120 (touch panel) in a left to right direction moving 0.1 cm, a detecting variation Vdet and a detected moving direction will be detected by the detecting unit 120. The detecting variation Vdet corresponds to 0.1 cm and the detected moving direction corresponds to left-to-right. Since the detecting variation Vdet is not greater than the predetermined threshold value Vpre (0.1 cm < 0.2cm) and the detected moving direction corresponds to left-to-right, the controlling unit 130 controls the displaying unit 110 (LCD) to display an animation indicative of incompletely turning the page from left to right and still displays the current image on page 9, as shown in Fig. 6. Fig. 6 is a diagram illustrating an animation indicative of incompletely turning the page from left to right.

It should be noted that the animation indicative of completely turning a page and the animation indicative of incompletely turning a page both correspond to either right-to-left or left-to-right directions in the above embodiments; the same concept, however, can be applied to other types of image browsing apparatus. For example, in another embodiment, if one user touches the surface of the detecting unit 120 (touch panel) in an up to down direction and the detecting variation Vdet generated from the movement is greater than the predetermined threshold value Vpre, the animation indicative of completely turning the page displayed by the displaying unit 110 can be an animation indicative of completely turning the page in a downwards movement. Similarly, if one user touches the surface of the detecting unit 120 (touch panel) in a down to up direction and the detecting variation Vdet generated from the movement is greater than the predetermined threshold value Vpre, the animation indicative of completely turning the page displayed by the displaying unit 110 can be an animation indicative of completely turning the page in an upwards movement.

In addition, the current image and target image are not limited to be on contiguous pages (e.g. the current image and target image are respectively on page 9 and page 10, or on page 9 and page 8). For example, the current image and target image can be on two distinct pages 5 pages apart (e.g. the current image and target image are respectively on page 9 and page 14, or on page 9 and page 4). Any relative position between the current image and target image determined by the detected moving direction also falls within the scope of the present invention.

In a preferable embodiment of the present invention, the steps shown in Fig. 2 can be modified by adding a step in step 250 so as to output a sound of turning the page while displaying the animation indicative of completely turning the page. Due to the above modification, the operation of the image browsing apparatus 100 changes. When the controlling unit 130 determines the detecting variation Vdet is greater than the predetermined threshold value Vpre, the controlling unit 130 controls the displaying unit 110 to display an animation indicative of completely turning the page for showing a target image instead of a current image in order to browse the target image and the controlling unit 130 further controls a sound outputting unit 140, such as a speaker, to output a sound of turning the page while displaying the animation indicative of completely turning the page. It should be noted that the sound outputting unit 140 is an optional unit; when outputting the sound of turning the page while displaying the animation indicative of turning the page is not required, the image browsing apparatus 100 does not comprise the sound outputting unit 140. This alternative design also falls within the scope of the present invention.

All combinations and sub-combinations of the above-described features also belong to the invention.

## Claims

1. An image browsing method, comprising:
detecting a movement corresponding to a user input to generate a detecting variation;
checking if the detecting variation is greater than a predetermined threshold value; **characterized by**:
when the detecting variation is greater than the predetermined threshold value, displaying an animation indicative of completely turning a page for showing a target image instead of a current image in order to allow browsing of the target image; and
when the detecting variation is not greater than the predetermined threshold value, displaying the current image for browsing of the current image.

2. The image browsing method of claim 1, **characterized by**:
detecting the movement corresponding to the user input to generate a detected moving direction;
wherein the step of displaying the animation indicative of completely turning the page for showing the target image instead of the current image in order to allow browsing of the target image is further **characterized by**:
determining the target image and the animation indicative of completely turning the page according to the detected moving direction.

3. The image browsing method of claim 1, **characterized in that** the step of displaying the current image for browsing of the current image further comprises:
displaying an animation indicative of incompletely turning the page.

4. The image browsing method of claim 3, **characterized by**:
detecting the movement corresponding to the user input to generate a detected moving direction;
wherein the step of displaying the current image for browsing of the current image is further **characterized by**:
determining the animation indicative of incompletely turning the page according to the detected moving direction.

5. The image browsing method of claim 1, **characterized in that** the step of displaying the animation indicative of completely turning the page for showing the target image instead of the current image in order to allow browsing of the target image is further **characterized by**:
outputting a sound of turning the page while displaying the animation indicative of completely turning the page.

6. An image browsing apparatus (100), comprising:
a displaying unit (110);
a detecting unit (120), for detecting a movement corresponding to a user input to generate a detecting variation; and
a controlling unit (130), for checking if the detecting variation is greater than a predetermined threshold value;
**characterized by**:
wherein when the controlling unit (130) determines the detecting variation is greater than the predetermined threshold value, the controlling unit (130) controls the displaying unit (110) to display an animation indicative of completely turning a page for showing a target image instead of a current image in order to allow browsing of the target image and when the controlling unit (130) determines the detecting variation is not greater than the predetermined threshold value, the controlling unit (130) controls the displaying unit (110) to display the current image for browsing of the current image.

7. The image browsing method of claim 6, **characterized in that** the displaying unit (110) is further utilized for detecting the movement corresponding to the user input to generate a detected moving direction, and when the controlling unit (130) determines the detecting variation is greater than the predetermined threshold value, the controlling unit (130) determines the target image and the animation indicative of completely turning the page according to the detected moving direction.

8. The image browsing apparatus (100) of claim 6, **characterized in that** when the controlling unit (130) determines the detecting variation is not greater than the predetermined threshold value, the controlling unit (130) controls the displaying unit (110) to display an animation indicative of incompletely turning the page.

9. The image browsing apparatus (100) of claim 8, **characterized in that** the displaying unit (110) is further utilized for detecting the movement corresponding to the user input to generate a detected moving direction, and when the controlling unit (130) determines the detecting variation is not greater than the predetermined threshold value, the controlling unit (130) determines the animation indicative of incompletely turning the page according to the detected moving direction.

10. The image browsing apparatus (100) of claim 6, **characterized by**:
a sound outputting unit (140);
wherein when the controlling unit (130) determines the detecting variation is greater than the predetermined threshold value, the controlling unit (130) controls the sound outputting unit (140) to output a sound of turning the page while displaying the animation indicative of completely turning the page.
